# EUROPEAN PATENT APPLICATION

(11) **EP 4 492 122 A1**
(43) Date of publication of application: **15.01.2025**
(21) Application number: 24188475.8
(22) Date of filing: 12.07.2024
(51) Int. Cl.: G02B 25/00, G02B 23/14

(54) **EYEPIECE FOR TELESCOPE**

(30) Priority: 14.07.2023 US 202363513675 P
(71) Applicant: Simulation Curriculum Corp., Minnetonka, Minnesota 55305 (US)
(72) Inventor: Braganca, Pedro, Ontario, L1K 0H8 (CA); Wright, Richard, Lake Mary, 32746 (US); Goodman, Michael, Minnetonka, 55305 (US); Souglakos, Evangelos, 15234 Chalandri (GR); Kechagias, Angelos, 19001 Keratea (GR)
(74) Representative: Forresters IP LLP

(57) **Abstract**

An eyepiece for a telescope includes a body including a first end having a mounting barrel extending therefrom and a second end, opposite the first end, supporting an eyepiece cup. A digital display is disposed within the body adjacent to the eyepiece cup. A camera is disposed within the body adjacent to the mounting barrel. A controller is operably coupled to the digital display and to the camera. The controller actuates the camera to capture an image and depicts the image on the digital display in near real time.

## Description

### CROSS-REFERENCE TO RELATED APPLICATIONS

This application claims priority to U.S. Provisional Patent Application No. 63/513,675, filed on July 14, 2023.

### FIELD OF THE DISCLOSURE

The invention relates to telescopes and in particular, to eyepieces of or for use with telescopes.

### SUMMARY

In one aspect, the present disclosure provides an eyepiece for a telescope. The eyepiece includes a body including a first end having a mounting barrel extending therefrom and a second end, opposite the first end, supporting an eyepiece cup. A digital display is disposed within the body adjacent to the eyepiece cup. A camera is disposed within the body adjacent to the mounting barrel. A controller is operably coupled to the digital display and to the camera. The controller actuates the camera to capture an image and depicts the image on the digital display in near real time.

In another aspect, the present disclosure provides an eyepiece for a telescope. The eyepiece includes a body including a first end having a mounting barrel extending therefrom and a second end, opposite the first end, supporting an eyepiece cup. A digital display is disposed within the body adjacent to the eyepiece cup. A camera is disposed within the body adjacent to the mounting barrel. A controller is operably coupled to the digital display and to the camera. The controller actuates the camera to capture an image and depicts the image on the digital display. A temperature regulating system maintains the controller within a desired operating temperature range.

In yet another aspect, the present disclosure provides an eyepiece for a telescope. The eyepiece includes a body including a first end having a mounting barrel extending therefrom and a second end, opposite the first end, supporting an eyepiece cup. A digital display is disposed within the body adjacent to the eyepiece cup. A camera is disposed within the body adjacent to the second end. A controller is operably coupled to the digital display and to the camera. The controller actuates the camera to capture an image and depicts the image on the digital display. The mounting barrel has a diameter that corresponds with a diameter of a focuser tube of the telescope.

In some aspects, the eyepiece is configured to support viewing through the telescope without a physical line of sight through the eyepiece.

In some aspects, the controller includes software configured to process images captured by the camera.

In some aspects, the software is configured to stack the images.

In some aspects, the eyepiece further includes a connectivity module configured to operably couple the controller with a remote device.

In some aspects, the connectivity module includes a WiFi module configured to provide a wireless connection between the controller and the remote device.

In some aspects, wherein the controller is configured to receive operating instructions from the remote device.

In some aspects, the controller is configured to display the image on the remote device for viewing remote from the eyepiece.

In some aspects, the controller is configured to display the image on the remote device simultaneously with depicting the image on the digital display.

In some aspects, the temperature regulating system includes a thermoelectric cooler.

In some aspects, the temperature regulating system includes a heat sink in thermal communication with the camera and with the thermoelectric cooler.

In some aspects, the temperature regulating system is further configured to regulate a temperature of the eyepiece cup to limit the buildup of condensation within the eyepiece cup.

In some aspects, the condensation limiting system includes a heating element.

In some aspects, the techniques described herein relate to an eyepiece, wherein the temperature regulating system is further configured to regulate a temperature of the digital display.

In some aspects, the body has a generally cylindrical shape.

In some aspects, the controller is disposed between the digital display and the camera within the body of the eyepiece.

In some aspects, the diameter of the mounting barrel is 2 inches.

Other aspects of the disclosure will become apparent by consideration of the detailed description and accompanying drawings.

### BRIEF DESCRIPTION OF THE DRAWINGS

FIG. 1 is a perspective view of a telescope in accordance with the present disclosure.
FIG. 2 is a perspective view of an eyepiece for use with the telescope of FIG. 1.
FIG. 3 is a schematic illustrating components of the eyepiece.
FIG. 4 is a block diagram of a control system of the eyepiece.
FIG. 5 is a schematic diagram of the eyepiece and telescope.
FIG. 6 is a side view of the eyepiece.
FIG. 7 is a perspective view of the eyepiece of FIG. 6.
FIG. 8 is another perspective view of the eyepiece of FIG. 6.
FIG. 9 is schematic illustrating components of the eyepiece of FIG. 6.
FIG. 10 illustrates an eyepiece for use with the telescope of FIG. 1 according to another embodiment of the present disclosure.

### DETAILED DESCRIPTION

Before any implementations of the disclosure are explained in detail, it is to be understood that the disclosure is not limited in its application to the details of construction and arrangement of components set forth in the following description or illustrated in the following drawings. The disclosure is capable of other implementations and of being practiced or being carried out in various ways.

Before any embodiments are explained in detail, it is to be understood that the embodiments are not limited in its application to the details of the configuration and arrangement of components set forth in the following description or illustrated in the accompanying drawings. The embodiments are capable of being practiced or of being carried out in various ways. Also, it is to be understood that the phraseology and terminology used herein are for the purpose of description and should not be regarded as limiting. The use of "including," "comprising," or "having" and variations thereof are meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings.

In addition, it should be understood that embodiments may include hardware, software, and electronic components or modules that, for purposes of discussion, may be illustrated and described as if the majority of the components were implemented solely in hardware. However, one of ordinary skill in the art, and based on a reading of this detailed description, would recognize that, in at least one embodiment, the electronic-based aspects may be implemented in software (e.g., stored on non-transitory computer-readable medium) executable by one or more processing units, such as a microprocessor and/or application specific integrated circuits ("ASICs"). As such, it should be noted that a plurality of hardware and software-based devices, as well as a plurality of different structural components, may be utilized to implement the embodiments. For example, "servers," "computing devices," "controllers," "processors," etc., described in the specification can include one or more processing units, one or more computer-readable medium modules, one or more input/output interfaces, and various connections (e.g., a system bus) connecting the components.

Telescopes are commonly used for observing celestial objects such as stars, galaxies, and planets. A traditional telescope includes an eyepiece through which a user looks to view a magnified image formed by a primary objective lens, mirror, or series of lenses or mirrors of the telescope. A telescope may be compatible with various different eyepieces, and each eyepiece may provide a different amount of magnification. It has become desirable to include "smart" capabilities within a telescope to provide a better user experience and digitally increase the capabilities of the telescope. For the purposes of the present disclosure, the term "smart" refers to, among other things, the ability to wirelessly communicate with other devices.

The present disclosure provides a digital eyepiece that is compatible with various telescopes to digitally increase the capabilities of the telescopes while maintaining a compact, traditional form factor. The eyepiece is a self-contained system including a camera, a digital display, and a controller, as will be described in greater detail herein. The eyepiece may be used with any telescope having a compatible focuser tube and thus may digitally increase the capabilities of any telescope to which the eyepiece is retrofitted. The eyepiece may provide near-real time viewing of celestial objects while incorporating image enhancing software to provide a clearer image than a traditional telescope. Furthermore, due to packaging the components within the eyepiece, the eyepiece provides a less expensive alternative for users who desire the increased functionality of a digitally enhanced telescope, without requiring the user to purchase a digital telescope.

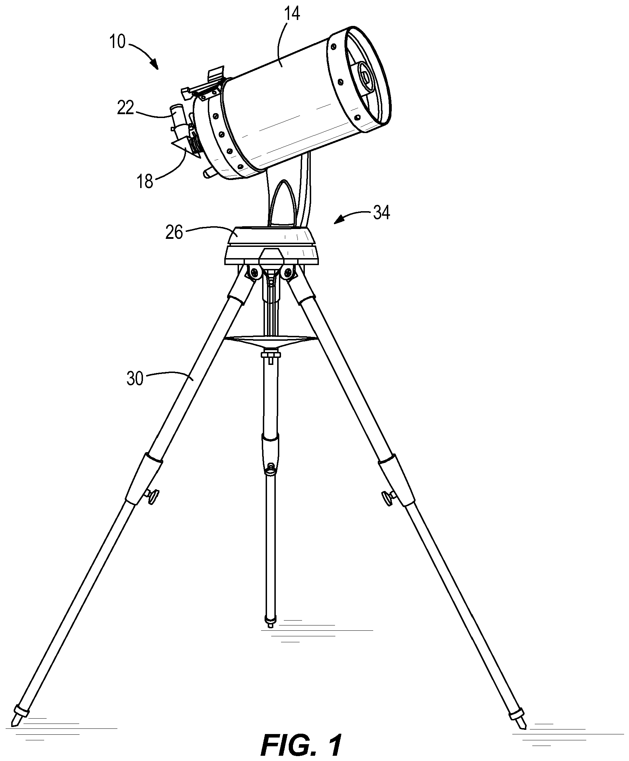

FIG. 1 illustrates a telescope 10 in accordance with an exemplary embodiment of the present disclosure. The telescope 10 includes, among other components, an optical tube 14 and a focuser tube 18. The focuser tube 18 receives an eyepiece 22 therein for a user to view objects through the telescope 10. In the illustrated embodiment, the telescope 10 is a computerized telescope, also known as a "go to" telescope. Accordingly, the telescope 10 includes a mount 26 supporting the telescope 10 relative to a trip-pod 30. In the illustrated embodiment, the mount 26 is automated. The mount 26 includes a drive system 34 capable of positioning (e.g., orienting) the telescope 10 to view a desired celestial object or location. Thus, the drive system 34 is capable of adjusting the pitch and the yaw of the optical tube 14 to aim the telescope 10. However, it should be understood that the eyepiece 22 may be used with different types of telescopes that differ from the telescope 10 shown in FIG. 1.

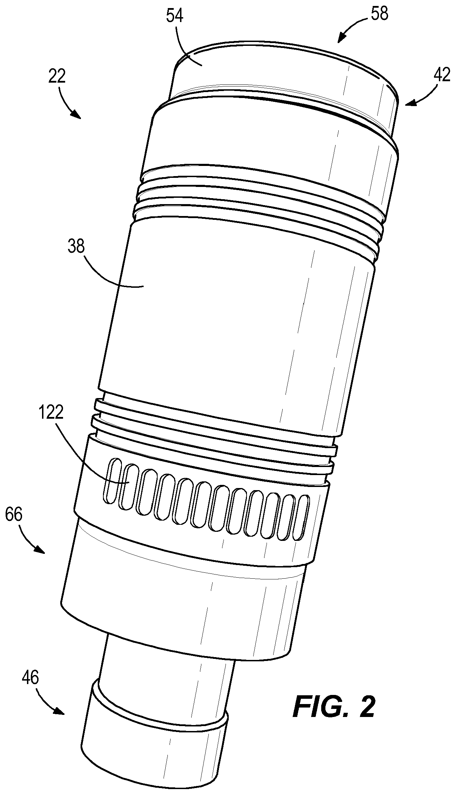

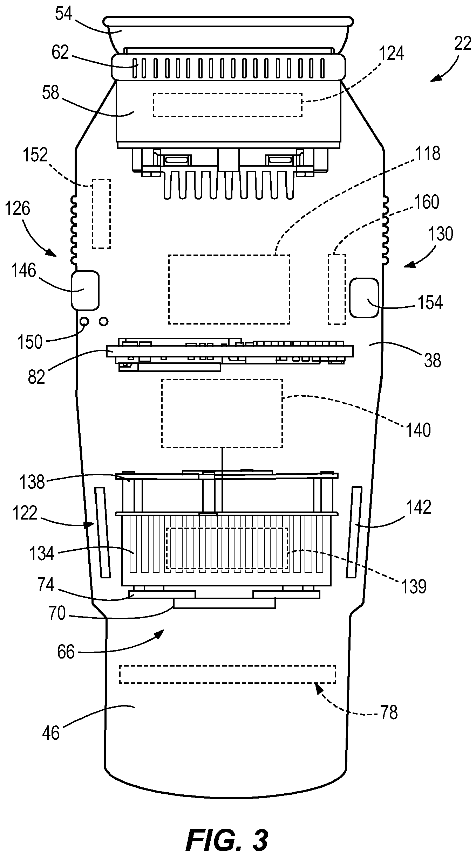

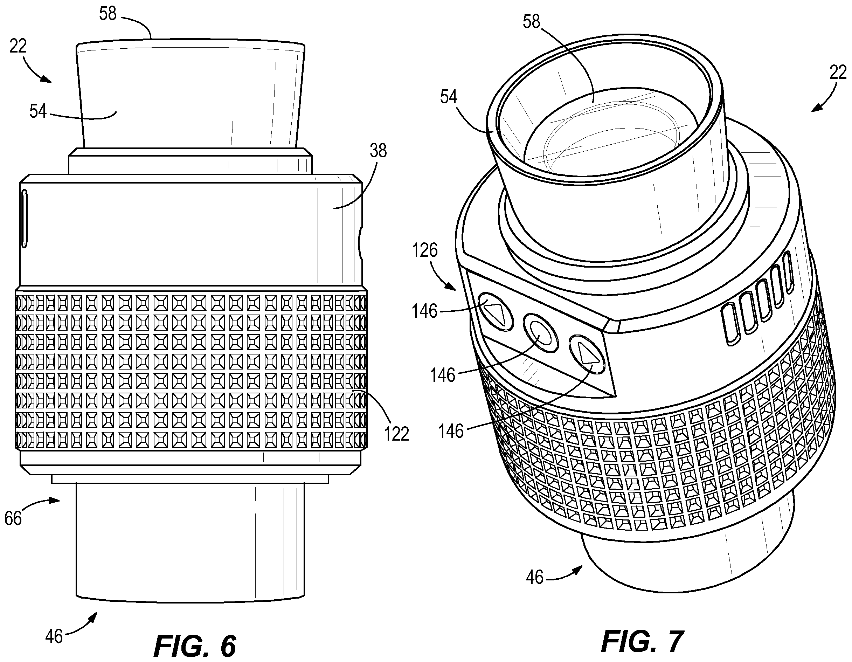

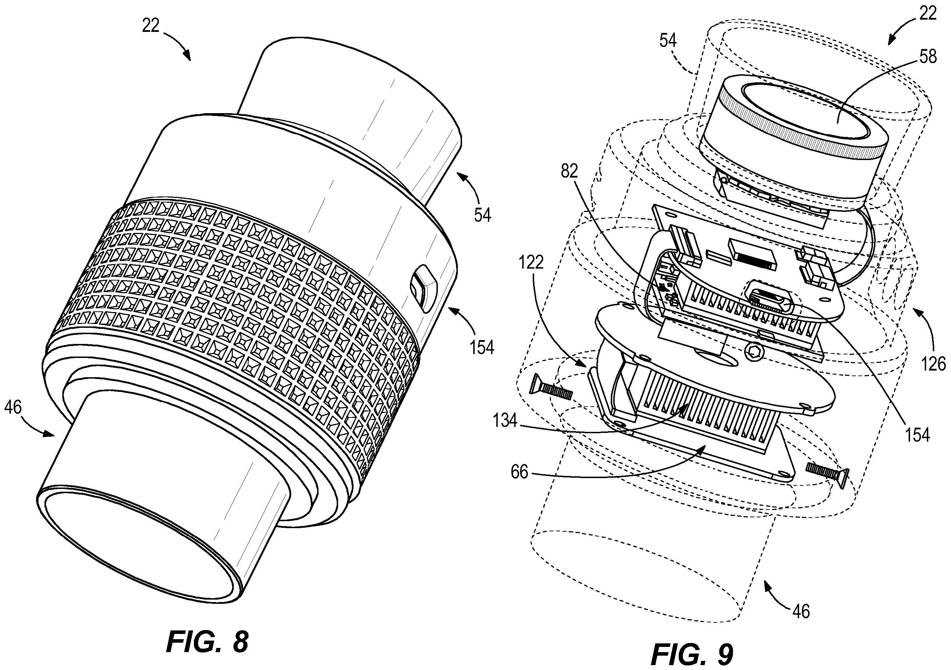

FIGS. 2, 3, and 6-9 illustrate an exemplary embodiment of the eyepiece 22 in accordance with the present disclosure. However, it should be understood that the some details of the eyepiece 22 illustrated in FIGS 2 and 3 may differ in other embodiments, the eyepiece 22 of the present disclosure is a digital eyepiece. The digital eyepiece 22 supports viewing without having a physical line of sight therethrough. The eyepiece 22 includes a body 38 having a generally cylindrical shape. Extending from a first end of the body 38 is a mounting barrel 46 sized and shaped to fit within the focuser tube 18 of the telescope 10 to mechanically couple the eyepiece 22 to the telescope 10. In some embodiments, the mounting barrel 46 may have a diameter of between 1 inch and 2.5 inches and more particular a diameter of 1.25 inches or 2 inches to be compatible with an industry standard size focuser tube. It should be understood that the mounting barrel 46 may be of a different size or shape to be compatible with a different, non-industry standard size focuser tube. In some embodiments, the mounting barrel 46 may further be compatible with a filter, such as a nebula filter for blocking select wavelengths of light. For example, a nebula filter may be coupled to the mounting barrel 46 to filter out wavelengths that cause light pollution. However, in other embodiments, the barrel 46 may not include a filter or alternatively, the filter may be positioned within a different portion of the eyepiece 22.

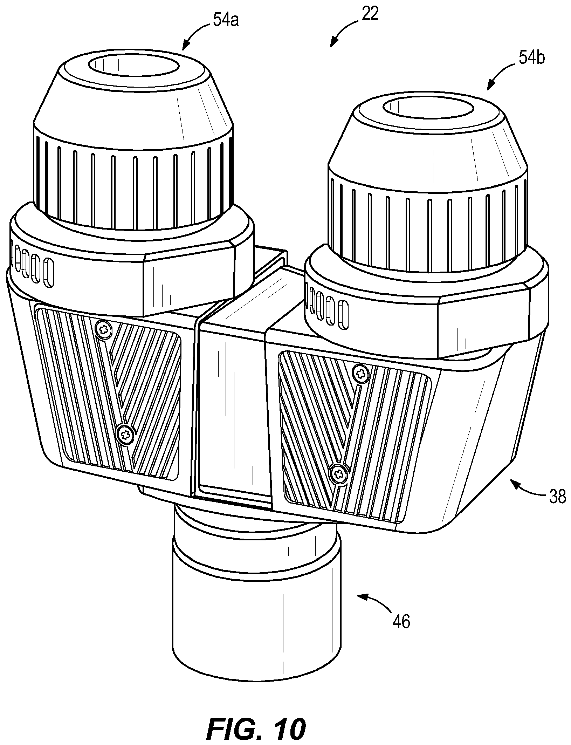

With continued reference to FIGS. 2, 3, and 6-9, positioned at a second end of the body 38, opposite the first end 42, is an eyepiece cup 54. The eyepiece cup 54 provides a port for the user to look through when using the eyepiece 22 and serves as a protective shield to prevent light from entering the user's field of vision as the user peers through the eyepiece 22. Thus, the eyepiece 22 of the present disclosure has a form factor similar to a standard, non-digital, eyepiece. It should be understood, however, that the eyepiece 22 may have other form factors so long as the eyepiece 22 remains compatible with the focuser tube 18 of the telescope 10. For example, the eyepiece 22 may be generally L-shaped, rather than cylindrical to be used with a refractor or catadioptric telescope. In some embodiments, the eyepiece 22 may be hinged or otherwise adjustable such that the position of the eyepiece cup 54 relative to the mounting barrel 46 is adjustable. In yet other embodiments, such as the embodiment of FIG. 10, the eyepiece 22 may include two eyepiece cups 54a, 54b to form a binoviewer. A binoviewer may enable immersive binocular viewing through the eyepiece 22. The binoviewer eyepiece 22 includes similar features to those described herein in relation to the eyepiece of FIG. 3 and is not described separately herein. One of ordinary skill in the art should understand that the description of components of the eyepiece 22 herein applies equally to components of the binoviewer eyepiece 22.

A digital display 58 is disposed within the body 38 of the eyepiece 22 and is operable as an electronic viewfinder. The digital display 58 is disposed adjacent the eyepiece cup 54 so as to be seen by a user as the user looks through the eyepiece cup 54. The digital display 58 may be a Liquid Crystal Display (LCD), Organic Light Emitting Diode display (OLED display), or other suitable means for displaying digital information. In the illustrated embodiment, a diopter adjustment ring 62 is operably coupled to the digital display 58 to adjust a focus the digital display 58 for the user. In other embodiments, different types of displays and focusers may be used.

A camera 66 is also disposed within the body 38 of the eyepiece 22. The camera 66 includes a sensor 70 and a circuit board 74 operable to control the sensor 70. The camera 66 is disposed adjacent the mounting barrel 46 and is positioned such that the sensor 70 is oriented to capture an image through the mounting barrel 46. Thus, the sensor 70 is positioned to capture an image through the telescope 10 when the eyepiece 22 is coupled to the telescope 10. In some embodiments, the camera 66 may be optionally positioned entirely within the mounting barrel 46 and supported by the mounting barrel 46. In such an embodiment, the mounting barrel 46 may be removable from the body 38 of the eyepiece 22, thereby allowing the camera 66 to be changed out by a user depending on the desired specifications of the camera 66. A micro focuser 78 is operably coupled to the sensor 70 to adjust or fine tune the focus of an image captured by the sensor 70 through the telescope 10.

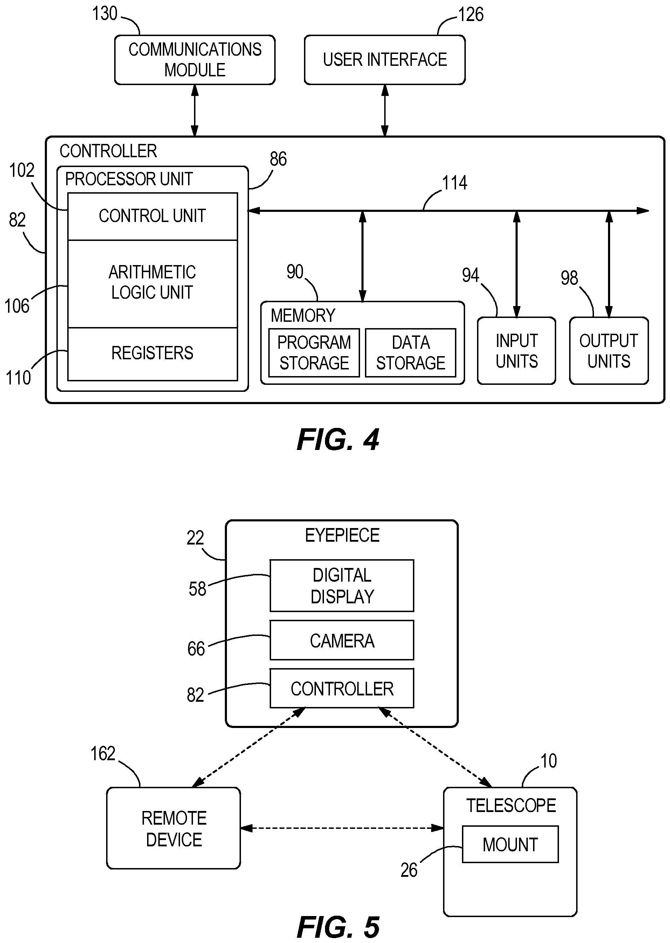

A control system is disposed within the body 38 of the eyepiece 22 and operably coupled to both the digital display 58 and the camera 66 (e.g., the circuit board 74), among other things. With reference to FIGS. 4 and 5, the control system includes a controller 82. The controller 82 is electrically and/or communicatively connected to a variety of modules or components of the eyepiece 22. For example, the illustrated controller 82 is electrically connected to the digital display 58 and to the circuit board 74 of the camera 66. The controller 82 includes combinations of hardware and software that are operable to, among other things, control operation of the eyepiece 22 and electronically couple the eyepiece 22 to remote electronics. The controller 82 includes a plurality of electrical and electronic components that provide power, operational control, and protection to the components and modules within the controller 82 and the eyepiece 22. For example, the controller 82 includes, among other things, a processing unit 86 (e.g., a microprocessor, a microcontroller, an electronic processor, an electronic controller, or another suitable programmable device), a memory 90, input units 94, and output units 98. The processing unit 86 includes, among other things, a control unit 102, an arithmetic logic unit (ALU) 106, and a plurality of registers 110 (shown as a group of registers) and is implemented using known computer architecture (e.g., a modified Harvard architecture, a von Neumann architecture, etc.). The processing unit 86, the memory 90, the input units 94, and the output units 98, as well as the various modules or circuits connected to the controller 82 are connected by one or more control and/or data buses (e.g., common bus 114). The control and/or data buses for the interconnection between and communication among various modules, circuits, and components would be known to a person skilled in the art in view of the present disclosure.

The memory 90 is a non-transitory computer readable medium and includes, for example, a program storage area and a data storage area. The data storage area, for example, may store images captured by the eyepiece 22 through the telescope 10. The program storage area and the data storage area can include combinations of different types of memory, such as a read only memory ("ROM"), a random access memory ("RAM") (e.g., dynamic RAM ["DRAM"], synchronous DRAM ["SDRAM"], etc.), electrically-erasable programmable ROM ("EEPROM"), flash memory, a hard disk, an SD card, or other suitable magnetic, optical, physical, or electronic memory devices. The processing unit 86 is connected to the memory 90 and is configured to execute software instructions that are capable of being stored in a RAM of the memory 90 (e.g., during execution), a ROM of the memory 90 (e.g., on a generally permanent basis), or another non-transitory computer readable medium such as another memory or a disc. Software included in the implementation of the eyepiece 22 and controller 82 can be stored in the memory 90 of the controller 82. The software includes, for example, firmware, one or more applications, program data, filters, rules, one or more program modules, and other executable instructions. The software of the illustrated embodiment includes image processing software capable of image stacking and image enhancement, among other things. The software also includes the ability to control the mount 26 (e.g., the drive system 34) of the computerized telescope 10. The controller 82 is configured to retrieve from the memory 90 and execute, among other things, instructions related to the control processes and methods described herein. In other embodiments, the controller 82 includes additional, fewer, or different components.

Referring again to FIGS. 2, 3, and 6-9, the illustrated exemplary eyepiece 22 further includes a power source 118 to provide electrical power to the eyepiece 22, a temperature regulating system 122 to maintain the eyepiece 22 within a desired operational temperature range, a user interface 126 for controlling the eyepiece 22, and a connectivity system 130. However, it should be understood that in some embodiments the eyepiece 22 may not include one or more of a power source 118, a temperature regulating system 122 or a user interface 126. Alternatively, one or more of these features may be provided in a different area of the telescope 10 or remotely. For example, a user interface 126 may be provided on another area of the telescope 10 or on a remove device.

The power source 118 may be a battery or an external power source. In the illustrated embodiment, the power source 118 is a rechargeable battery and is electrically coupled to the digital display 58, the camera 66, and the controller 82, among other things. In other embodiments, the battery (e.g., the power source118) may be removable and/or replaceable. The battery 118 may be charged by an external power source via the connectivity system 130. The size and/or chemistry of the battery 118 would be known to a person skilled in the art in view of the present disclosure. In some embodiments, the power source 118 may be an external power source that is electrically coupled to the eyepiece 22 via the connectivity system 130.

The temperature regulating system 122 ensures that the eyepiece components (e.g., the camera 66 and the controller 82) are within a desired operating temperature range. Although a variety of different temperature regulating systems 122 may be used, one exemplary embodiment of a temperature regulating system 122 is described herein. However, it should be understood that the particular features of the temperature regulating system 122 may be different from embodiment to embodiment. In the illustrated embodiment, the temperature regulating system 122 is a cooling system. With reference to FIG. 3, the cooling system 122 is a thermoelectric cooling system that includes a heat sink 134, a fan 138, a thermoelectric cooler 139, and a plurality of cooling vents 142 disposed within the body 38 of the eyepiece 22. The cooling system 122 is positioned between the controller 82 and the camera 66 within the body 38 of the eyepiece 22. More particularly, the heat sink 134 is positioned in thermal communication with the camera 66 (e.g., the circuit board 74) to draw heat out of the camera 66. In some embodiments, the thermoelectric cooler 139 may be coupled to the heat sink 134 or other components of the eyepiece 22 to draw heat out of the components of the eyepiece 22. The fan 138 is positioned adjacent the heat sink 134, and the controller 82 is positioned on an opposite side of the fan 138 as the camera 66 and heat sink 134. The cooling vents 142 are at least partially aligned with the heat sink 134 and the fan 138. In other embodiments, the cooling vents 142 may be disposed at different positions relative to the components of the eyepiece 22. Of course, slight variations in the position of these components may be possible to achieve cooling of the components within the eyepiece 22.

The fan 138 is rotatable to generate an airflow within the body 38 of the eyepiece 22 to cool one or more of the controller 82, the heat sink 134, the batter 116, the display 58, and the camera 66, among other things. In some embodiments, the fan 138 may be driven for rotation by an electric motor 140, which, in turn, may be controlled by the controller 82. In such an embodiment, the electric motor 140 may be electrically coupled to the battery 118 to receive power from the battery 118. In other embodiments, the fan 138 may be a heat fan or a thermoelectric fan that is driven for rotation by a heat differential within the body 38 of the eyepiece 22.

The fan 138 may be of any type capable of generating the airflow within the body 38 of the eyepiece 22. For example, the fan 138 may be an axial flow fan that, when rotating, draws air along a rotational axis A1 of the fan 138. Thus, the fan 138 may draw air from the controller 82 towards the heat sink 134 and to the cooling vents 142 where the air exits the body 38. Alternatively, the fan 138 may be a centrifugal fan that is aligned with the cooling vents 142. In such an embodiment, the fan 138 may draw a first airflow axially towards the fan 138 from the controller 82 to cool the controller 82 and a second airflow axially towards the fan 138 from the camera 66 and the heat sink 134 to cool the camera 66 and the heat sink 134. The first and second airflows are joined at the fan 138 and directed radially outwards towards the cooling vents 142 to be expelled from the body 38 of the eyepiece 22. In some embodiments, the temperature regulating system 122 further includes a condensation limiting system 124 disposed within the body 38 of the eyepiece 22. In some embodiments (FIG. 3), the condensation limiting system 124 is disposed adjacent to the eyepiece cup 54. The condensation limiting system 124 may be a heating element, a heater wire, or other heater that is operable to limit the buildup of condensation and dew within the eyepiece cup 54.

The user interface 126 of the illustrated embodiment includes a control actuator 146 and a plurality of indicators 150. The control actuator 146 is operable to turn the eyepiece 22 on and off and change the function or operational mode of the eyepiece 22. If a single control actuator 146 is implemented, the eyepiece 22 may be controlled via different patterns of actuating the control actuator 146 (e.g., a short press, a long press, or multiple presses). In some embodiments, the eyepiece 22 may include a plurality of control actuators 146 that perform separate functions, such as turning the eyepiece 22 on and off, changing the operational mode of the eyepiece 22, cycling through settings or view options for the digital display 58, saving an image depicted on the digital display 58, etc. It should be understood that the number and function of control actuators 146 may change based on the desired style of user interface 126 and the features implemented in the eyepiece 22.

In the illustrated embodiment, the plurality of indicators 150 are LED indicators (e.g., lights) positioned on an outer surface of the body 38 of the eyepiece 22. However, in other embodiments, different types of indicators may be utilized. The LED indicators 150 are operably coupled to the controller 82 to be selectively illuminated to convey information about the eyepiece 22 to the user. The LED indicators 150 may selectively display multiple colors (e.g., red or green), a solid color, or a blinking color (e.g., cycling on and off) to convey various information to the user. For example, the LED indicators 150 may optionally convey information about battery life or the operational mode in which the eyepiece 22 is currently in. In some embodiments, the eyepiece 22 may optionally include non-visual indicators in conjunction with or in place of the LED indicators 150. For example, the eyepiece 22 may include a speaker 152 to provide an audio indication to a user. The audio indication to the user may take the form of audio descriptions of images displayed, audio instructions for manipulating the eyepiece 22 and/or the telescope 10, or other relevant information to aid the user in operation of the eyepiece 22 and/or telescope 10.

The connectivity system 130 includes, among other things, an input/output port 154 and a WiFi module 160. It should be understood that a variety of different input and output ports may be utilized to achieve the functionality described. For example, the input/output ports may utilized wired connections and/or wireless connections which are known to a person of ordinary skill in the art. Likewise, the WiFi module 160 may be replaced by other forms of wired or wireless communication, such a Bluetooth or other nearfield communication. Alternatively, the WiFi module 160 may be replaced by a hardwired connection.

FIGS. 3, 4, and 5 illustrate on exemplary embodiment of a connectivity system 130 that may be utilized in the eyepiece 22. In the illustrated embodiment, the input/output port 154 may be a USB-C port and is operably coupled to the controller 82 and to the battery 118. The input/output port 154 allows for a direct, wired electrical connection to recharge the battery 118 and separately allows for a direct, wired electrical connection to transmit data to/from the controller 82. In some embodiments, the input/output port 154 may be an ST4 guider portion to couple the eyepiece 22 to the telescope 10 to guide the telescope 10. In some embodiments, the connectivity system 130 may use a plurality of ports 154 for providing a power connection to the battery 118 and for a data connection to the controller 82, and the ports may be of suitable types other than USB-C. In some embodiments, the input/output port 154 may also be operable to receive an image storage device, such as an SD card or a Micro SD card.

The WiFi module 160 also functions to provide a data connection with the controller 82. The WiFi module 160 allows a remote device 162, such as a phone, tablet, or computer, to be wirelessly coupled to the controller 82. In the illustrated embodiment, the WiFi module 160 is formed as a compact flat patch antenna that supports multi-band WiFi connectivity. The wireless connection allows for, among other things, remote viewing of the images being captured, remote storage of the images being captured, remote control of the eyepiece functions, and remote control of the go to functionality, etc. In some embodiments, the controller 82 is capable of being coupled to the remote device 162 for immediate viewing of an image on the remote device 162. Thus, allowing for multiple immediate viewing options. For example, a user may view a celestial object via the eyepiece 22 or via the remote device 162. Alternatively, a primary user may peer through the eyepiece 22 for immediate viewing of a celestial object via the eyepiece 22 while a secondary viewer utilizes the remote device 162 to immediately view the celestial object.

To use the eyepiece 22, a user of the telescope 10 peers through the eyepiece cup 54 to view the digital display 58. Simultaneously, the controller 82 actuates the sensor 70 of the camera 66 to capture images of a celestial object and depicts the images on the digital display 58 for the user to see. More particularly, a user first couples the eyepiece 22 to the telescope by inserting the mounting barrel 46 into the focuser tube 18 of the user's telescope of choice. The controller 82 includes software capable of determining telescope variables, such as aperture sizes and focal lengths, and compensates for these variables via the image processing software so that the eyepiece 22 is compatible with various telescopes. Inserting the mounting barrel 46 into the focuser tube 18 mechanically couples the eyepiece 22 to the telescope 10 and orients the camera 66 to be viewing through the telescope 10. The user also powers on the eyepiece 22 via the user interface 126 and electronically couples the eyepiece 22 to the drive system 34 of the mount 26, if the telescope 10 is a computerized telescope (e.g., via the ST4 guider port). Electronic coupling of the eyepiece 22 to the drive system 34 allows the controller 82 within the eyepiece 22 to control the go to functionality of the mount 26. Once the eyepiece 22 is mechanically and electronically coupled to the telescope 10, the user peers through the eyepiece 22 to view a celestial object and actuates the user interface 126 to achieve a desired operational mode of the eyepiece 22. The sensor 70 of the camera 66 captures images of the celestial object, which are then processed by the image processing software of the controller 82 and displayed on the digital display 58 for the user to see in near real time. The eyepiece 22 is used similar to a traditional eyepiece; however, the eyepiece 22 provides increased functionality in comparison to a traditional eyepiece.

The functionality of the eyepiece 22, and thus the telescope 10, is increased in part due to the controller 82 and the image processing software that allows images captured by the sensor 70 of the camera 66 to be stacked and enhanced. The sensor 70 continuously captures images of the celestial object and updates the image depicted on the digital display 58. In the illustrated embodiment, the controller 82 continuously updates the orientation of the telescope 10 via the drive system 34 to track the celestial object as it moves relative to the telescope 10. The use of image stacking digitally increases the effectiveness (e.g., magnification and clarity) of the telescope 10 by combining the continuously captured images to increase the effective amount of light that has been captured. In some embodiments, the image processing software may detect if an image is blurry or of low quality and prevent the image from being included in the image stack. The image processing software, therefore, increases the clarity and details of the image being seen, thus digitally increasing the capabilities of the telescope 10. The number of images included in the stack increases with the amount of time the eyepiece 22 tracks an object. Accordingly, increasing the amount of time that an object is tracked by the eyepiece 22 continually increases the capabilities of the telescope. For example, continuous image stacking allows a 3-inch telescope equipped with the eyepiece 22 to display an image equivalent to a 30 inch telescope without the eyepiece 22.

The controller 82 allows for objects depicted on the digital display 58 to be annotated, such that the digital display 58 functions as a heads-up display. For example, the eyepiece may include an integrated accelerometer, and the controller may dynamically adjust an orientation of text depicted on the digital display to orient the text based on the user's position and the ground. The controller 82 may also utilize the accelerometer and an integrated gyro sensor to provide prompts on the digital display 58 that guide the user to a desired target. In some embodiments, the controller 82 is further coupled to the micro focuser 78 and includes software that best determines how to focus the telescope 10. The controller 82 may then overlay instructions onto the image depicted on the digital display 58(e.g., as a heads-up display) for how the user should adjust the micro focuser 78. In some embodiments, the controller 82 may also overlay other information on the digital display 58, such as information about the celestial object being viewed.

Thus, the eyepiece 22 of the present disclosure replicates the use of a traditional eyepiece while digitally increasing the effectiveness of the telescope 10. Use of the camera 66, the controller 82, and the digital display 58 allows for the capturing an increased amount of light when compared to a traditional eyepiece with the same size telescope, thereby creating a more detailed and enhanced image of a celestial object. The controller 82 can also mitigate the effects of light pollution and poor eyesight via the image processing software. Finally, the eyepiece 22 of the present disclosure provides the ability to save, store, and share images of the celestial object, unlike a traditional eyepiece which only allows viewing. The eyepiece of the present disclosure provides the capability of a smart telescope within the traditional form factor of an eyepiece than can be used with any telescope having a compatible focuser tube.

Various features and aspects of the present disclosure are set forth in the following clauses.

Clause 1. An eyepiece for a telescope, the eyepiece comprising: a body including a first end having a mounting barrel extending therefrom and a second end, opposite the first end, supporting an eyepiece cup; a digital display disposed within the body adjacent to the eyepiece cup; a camera disposed within the body adjacent to the mounting barrel; and a controller operably coupled to the digital display and to the camera, the controller configured to actuate the camera to capture an image and further configured to depict the image on the digital display in near real time.

Clause 2. The eyepiece of any of the preceding clauses, wherein the eyepiece is configured to support viewing through the telescope without a physical line of sight through the eyepiece.

Clause 3. The eyepiece of any of the preceding clauses, wherein the controller includes software configured to process images captured by the camera.

Clause 4. The eyepiece of any of the preceding clauses, wherein the software is configured to stack the images.

Clause 5. The eyepiece of any of the preceding clauses, further comprising a connectivity module configured to operably couple the controller with a remote device.

Clause 6. The eyepiece of any of the preceding clauses, wherein the connectivity module includes a WiFi module configured to provide a wireless connection between the controller and the remote device.

Clause 7. The eyepiece of any of the preceding clauses, wherein the controller is configured to receive operating instructions from the remote device.

Clause 8. The eyepiece of any of the preceding clauses, wherein the controller is configured to display the image on the remote device for viewing remote from the eyepiece.

Clause 9. The eyepiece of any of the preceding clauses, wherein the controller is configured to display the image on the remote device simultaneously with depicting the image on the digital display.

Clause 10. An eyepiece for a telescope, the eyepiece comprising: a body including a first end having a mounting barrel extending therefrom and a second end, opposite the first end, supporting an eyepiece cup; a digital display disposed within the body adjacent to the eyepiece cup; a camera disposed within the body adjacent to the mounting barrel; a controller operably coupled to the digital display and to the camera, the controller configured to actuate the camera to capture an image and further configured to depict the image on the digital display; and a temperature regulating system configured to maintain the controller within a desired operating temperature range.

Clause 11. The eyepiece of any of the preceding clauses, wherein the temperature regulating system includes a thermoelectric cooler.

Clause 12. The eyepiece of any of the preceding clauses, wherein the temperature regulating system includes a heat sink in thermal communication with the camera and with the thermoelectric cooler.

Clause 13. The eyepiece of any of the preceding clauses, wherein the temperature regulating system is further configured to regulate a temperature of the eyepiece cup to limit the buildup of condensation within the eyepiece cup.

Clause 14. The eyepiece of any of the preceding clauses, wherein the condensation limiting system includes a heating element.

Clause 15. The eyepiece of any of the preceding clauses, wherein the temperature regulating system further includes a condensation limiting system configured to limit the buildup of condensation within the eyepiece cup.

Clause 16. The eyepiece of any of the preceding clauses, wherein the temperature regulating system is further configured to regulate a temperature of the digital display.

Clause 17. An eyepiece for a telescope, the eyepiece comprising: a body including a first end having a mounting barrel extending therefrom and a second end, opposite the first end, supporting an eyepiece cup; a digital display disposed within the body adjacent to the eyepiece cup; a camera disposed within the body adjacent to the second end; and a controller operably coupled to the digital display and to the camera, the controller configured to actuate the camera to capture an image and further configured to depict the image on the digital display; wherein the mounting barrel has a diameter that corresponds with a diameter of a focuser tube of the telescope.

Clause 18. The eyepiece of any of the preceding clauses, further comprising a battery to provide power to one or more component of the eyepiece.

Clause 19. The eyepiece of any of the preceding clauses, wherein the controller is disposed between the digital display and the camera within the body of the eyepiece.

Clause 20. The eyepiece of any of the preceding clauses, wherein the diameter of the mounting barrel is 2 inches.

The embodiments described above and illustrated in the figures are presented by way of example only and are not intended as a limitation upon the concepts and principles of the present invention. As such, it will be appreciated by one having ordinary skill in the art that various changes in the elements and their configuration and arrangement are possible without departing from the scope of the present invention as defined by the appended claims. For example, one having ordinary skill in the art will appreciate that specific features of the numerous embodiments disclosed may be mixed and matched in other ways where not specifically inhibited, even though specific illustration of such embodiments may not be exhaustively covered herein.

When used in this specification and claims, the terms "comprises" and "comprising" and variations thereof mean that the specified features, steps or integers are included. The terms are not to be interpreted to exclude the presence of other features, steps or components.

Protection may be sought for any features disclosed in any one or more published documents referenced herein in combination with the present disclosure.

Although certain example embodiments of the invention have been described, the scope of the appended claims is not intended to be limited solely to these embodiments. The claims are to be construed literally, purposively, and/or to encompass equivalents.

Various features and aspects of the present disclosure are set forth in the following claims.

## Claims

1. An eyepiece for a telescope, the eyepiece comprising:
a body including a first end having a mounting barrel extending therefrom and a second end, opposite the first end, supporting an eyepiece cup;
a digital display disposed within the body adjacent to the eyepiece cup;
a camera disposed within the body adjacent to the mounting barrel; and
a controller operably coupled to the digital display and to the camera, the controller configured to actuate the camera to capture an image and further configured to depict the image on the digital display in near real time.

2. The eyepiece of claim 1, wherein the eyepiece is configured to support viewing through the telescope without a physical line of sight through the eyepiece.

3. The eyepiece of claim 1 or claim 2, wherein the controller includes software configured to process images captured by the camera.

4. The eyepiece of claim 3, wherein the software is configured to stack the images.

5. The eyepiece of any one of the preceding claims, further comprising a connectivity module configured to operably couple the controller with a remote device.

6. The eyepiece of claim 5, wherein the connectivity module includes a WiFi module configured to provide a wireless connection between the controller and the remote device.

7. The eyepiece of claim 6, wherein the controller is configured to receive operating instructions from the remote device.

8. The eyepiece of claim 7, wherein the controller is configured to display the image on the remote device for viewing remote from the eyepiece.

9. The eyepiece of claim 8, wherein the controller is configured to display the image on the remote device simultaneously with depicting the image on the digital display.

10. An eyepiece for a telescope, the eyepiece comprising:
a body including a first end having a mounting barrel extending therefrom and a second end, opposite the first end, supporting an eyepiece cup;
a digital display disposed within the body adjacent to the eyepiece cup;
a camera disposed within the body adjacent to the mounting barrel;
a controller operably coupled to the digital display and to the camera, the controller configured to actuate the camera to capture an image and further configured to depict the image on the digital display; and
a temperature regulating system configured to maintain the controller within a desired operating temperature range.

11. The eyepiece of claim 10, wherein the temperature regulating system includes a thermoelectric cooler.

12. The eyepiece of claim 11, wherein the temperature regulating system includes a heat sink in thermal communication with the camera and with the thermoelectric cooler.

13. The eyepiece of any one of claims claim 10 to 12, wherein the temperature regulating system is further configured to regulate a temperature of the eyepiece cup to limit the buildup of condensation within the eyepiece cup, and optionally
wherein the condensation limiting system includes a heating element, and optionally wherein the temperature regulating system further includes a condensation limiting system configured to limit the buildup of condensation within the eyepiece cup, and optionally
wherein the temperature regulating system is further configured to regulate a temperature of the digital display.

14. An eyepiece for a telescope, the eyepiece comprising:
a body including a first end having a mounting barrel extending therefrom and a second end, opposite the first end, supporting an eyepiece cup;
a digital display disposed within the body adjacent to the eyepiece cup;
a camera disposed within the body adjacent to the second end; and
a controller operably coupled to the digital display and to the camera, the controller configured to actuate the camera to capture an image and further configured to depict the image on the digital display;
wherein the mounting barrel has a diameter that corresponds with a diameter of a focuser tube of the telescope.

15. The eyepiece of claim 14, further comprising a battery to provide power to one or more component of the eyepiece, and optionally
wherein the controller is disposed between the digital display and the camera within the body of the eyepiece, and optionally
wherein the diameter of the mounting barrel is 2 inches.
